# EUROPEAN PATENT SPECIFICATION

(11) **EP 2 762 869 B1**
(45) Date of publication and mention of the grant of the patent: **16.11.2016**
(21) Application number: 13405024.4
(22) Date of filing: 31.01.2013
(51) Int. Cl.: G01N 27/12

(54) **Integrated metal oxide chemical sensor**
Integrierter chemischer Metalloxidsensor
Capteur chimique d'oxyde métallique intégré

(43) Date of publication of application: 06.08.2014
(73) Proprietor: Sensirion AG, 8712 Stäfa (CH)
(72) Inventor: Bürgi, Lukas, 8049 Zürich (CH); Mayer, Felix, 8712 Stäfa (CH)
(74) Representative: Mirza, Akram Karim

(56) References cited:
- US-A1- 2006 138 575
- KOROTCENKOV ET AL: "The role of morphology and crystallographic structure of metal oxides in response of conductometric-type gas sensors", MATERIALS SCIENCE AND ENGINEERING R: REPORTS, ELSEVIER SEQUOIA S.A., LAUSANNE, CH, vol. 61, no. 1-6, 12 May 2008 (2008-05-12) , pages 1-39, XP022627843, ISSN: 0927-796X, DOI: 10.1016/J.MSER.2008.02.001 [retrieved on 2008-03-18]
- Michael Karst ET AL: "Humidity & Temperature Sensors in Mobile Phones", Wireless communication alliance event, 18 April 2012 (2012-04-18), pages 1-18, XP055069470, Retrieved from the Internet: URL:http://www.wca.org/event_archives/2012 /Sensirion_WCA_April2012_Mobile_Sensors.pd f [retrieved on 2013-07-03]
- CHIH-CHENG LU ET AL: "Multi-field simulations and characterization of CMOS-MEMS high-temperature smart gas sensors based on SOI technology", JOURNAL OF MICROMECHANICS & MICROENGINEERING, INSTITUTE OF PHYSICS PUBLISHING, BRISTOL, GB, vol. 18, no. 7, 75010, 1 July 2008 (2008-07-01), pages 1-11, XP020136912, ISSN: 0960-1317

## Description

### FIELD OF THE INVENTION

The present invention relates to an integrated chemical sensor, particularly a gas sensor, using metal oxide. The sensor is sufficiently small to be located within the exterior shell or housing of a portable electronic device such as a mobile phone, tablet and the like.

### BACKGROUND OF THE INVENTION

Portable or mobile devices originally introduced as mobile phones or electronic agendas become more and more ubiquitous. As the processing power of their internal processors grows and equally the bandwidth for communication with stationary processors, such portable devices take on more and more the role of multi-purpose tools available to consumers and specialist users alike.

It has been recognized that portable devices can benefit from the presence of sensors capable of providing a chemical analysis of materials brought into contact or the vicinity of the device. Whilst there are many possible applications for such sensors, it suffices to consider for example the analysis of air surrounding the portable device. Such an analysis can be useful for multiple purposes such as testing for hazardous gases, breath analysis for general medical purposes or driving fitness, and the like.

The article "The role of morphology and crystallographic structure of metal oxides in response of conductometric-type gas sensors" by G. Korotcenkov, Materials Science and Engineering R: Reports, Elsevier Sequoia S.A., Lausanne, CH, vol. 61, no. 1-6, 12 May 2008, pages 1-39 discusses the influence of morphology and crystallographic structure on gas-sensing characteristics of metal oxide conductometric-type sensors.

US 2006/0138575 A1 discloses Nanowire fluid sensors.

However integrating such a sensor within the narrow confines of a modern day portable device poses a significant technical challenge. Typically for such devices only a very limited volume is acceded to additional sensors outside the core functionality of the device such as wireless voice or data communication, display, speaker, processors and battery. This means that the real overall dimensions of the sensor, its associated circuitry for control and readout have to be within or close to the submillimeter range.

A sensor with these outer dimensions can only be manufactured, if the active structures, i.e. the size of the metal oxide film between electrodes, are reduced in length to below 50 microns or even less. However, in metal oxide sensors of this size the changes of electrical resistance caused by the gas become less whilst the resistance caused by interface effects between the (metallic) contact electrodes and the metal oxide film contributes in ever larger proportion to the measurement, thus making it more difficult to measure actual changes in gas concentrations.

It is therefore seen as an object of the invention to improve the chemical sensors using metal oxide films contacted through metallic electrodes, particularly for very small devices.

### SUMMARY OF THE INVENTION

Hence, according to a first aspect of the invention, there is provided a chemical sensor comprising at least one layer of a metal oxide arranged between two electrodes with the length of the layer of a metal oxide between the electrodes being less than 50 microns, wherein at least one interface layer is placed between the surface of at least one of the electrodes and the layer of metal oxide and wherein the interface layer lowers the contact resistance between the electrodes and the layer of metal oxide by facilitating transport of charge carriers across layer boundaries.

In a first variant, the interface layer includes a material which creates under static conditions a positively [negatively] charged layer leading to a band bending at the interface to the electrode material. This material can be for example a strongly n-doped [p-doped] material, if the metal oxide used as sensor material is n-doped [p-doped].

In a second variant, the interface material provides a conduction band at an energy level between the Fermi level of the electrode material and the conduction band of the layer of metal oxide.

In a third variant of the invention, the interface material includes a dipole layer between the electrode and the layer of metal oxide, particularly a dipole layer with the positively charged pole oriented towards the metal oxide layer.

In a preferred embodiment of the invention, a sensor in accordance with this invention is integrated as component within a portable electronic device having further uses other than chemical sensing. The portable device can be a smart phone, a handheld computer, a laptop, an electronic reader, a tablet computer, a game controller, a pointing device, a photo or a video camera, a digital music player, a wrist watch, a key fob, a head set or a computer peripheral. Its housing is typically a shell of metal, glass, or plastic material and can be assembled as a unibody or from several parts. Enclosed in the housing are typically processors, drivers for parts such as screens, antennae, cameras, microphones and speakers as well as batteries to provide power to the device and its parts. A screen is typically arranged as a part of the housing or mounted behind a transparent window of the housing.

In a preferred embodiment of the invention, a sensor in accordance with this invention is behind an opening with an area of less than 3 square millimeters providing a gas permeable access to a small duct within the housing.

The duct acts as confinement for the air inside the housing and can take the shape of a tube or channel formed as part of the housing or as a separate part connected to an opening in the housing. It can be a single straight or curved duct.

The opening itself can be a dedicated opening thus exclusively connecting the chemical sensor to the outside. However, given that the manufacturers of portable electronic devices strive to maintain the housing as a good protection against humidity and water, it is seen as advantageous that the opening is shared with at least one further component of the portable device requiring a similar connection to the exterior, such as a loudspeaker, a microphone or a camera. The opening can further be protected by a grill or a membrane to prevent bigger particles or unwanted components of the air from entering or blocking the duct.

The chemical sensor may be understood as a sensor device for detecting one or even more properties of one or more analytes. It is preferably based on one of the following measurement principles:
The sensor is best based on a metal-oxide such as tin oxide, tungsten oxide, gallium oxide, indium oxide, zinc oxide, which preferably may be applied in a high temperature environment. ISFET (ion-selective FET) may also be used, as well as chemocapacitors wherein it is preferred to use a polymer as active material.

The sensor includes in form of a layer, also denoted as receptor layer, to which an analyte may bond to and as such modify an electrical property of the sensor material such as its electrical conductance, which principle preferably is applied in metal oxide chemical sensors. It can also include a plurality of different sensors or an array of similar sensors. In such a sensor array, each sensor cell may provide a layer of a material exhibiting different absorption characteristics such that each cell of the sensor array may specifically be sensitive to a different analyte and as such may enable the portable electronic device to detect the presence or absence or concentration of such analyte.

The sensor is best integrated with CMOS circuitry for control and read-out onto a common substrate.

The above and other aspects of the present invention together with further advantageous embodiments and applications of the invention are described in further details in the following description and figures.

### BRIEF DESCRIPTION OF THE FIGURES

FIG. 1A is a schematic perspective view of a known metal oxide gas sensor;
FIG. 1B is schematic cross-section of the device of Fig. 1A;
FIG. 2A is an equivalent circuit diagram for a metal oxide gas sensor;
FIG. 2B is an equivalent circuit diagram for a metal oxide gas sensor with structures smaller than the sensor of FIG. 2A;
FIG. 2C illustrates schematically the energy band structure of a metal oxide gas sensor at the interface between electrode and metal oxide film;
FIG. 3A is a schematic cross-section of a metal oxide gas sensor in accordance with an example of the invention;
FIGs. 3B - 3D are schematic illustrations of the band structure at the transition from metal to the metal oxide for variants of the example of FIG. 3A;
FIGs. 4A - 4B illustrate a method for manufacturing a device in accordance with an example of the invention; and
FIGs. 5A - 5B illustrate a device in accordance with an example of the invention in a mobile electronic device.

### DETAILED DESCRIPTION

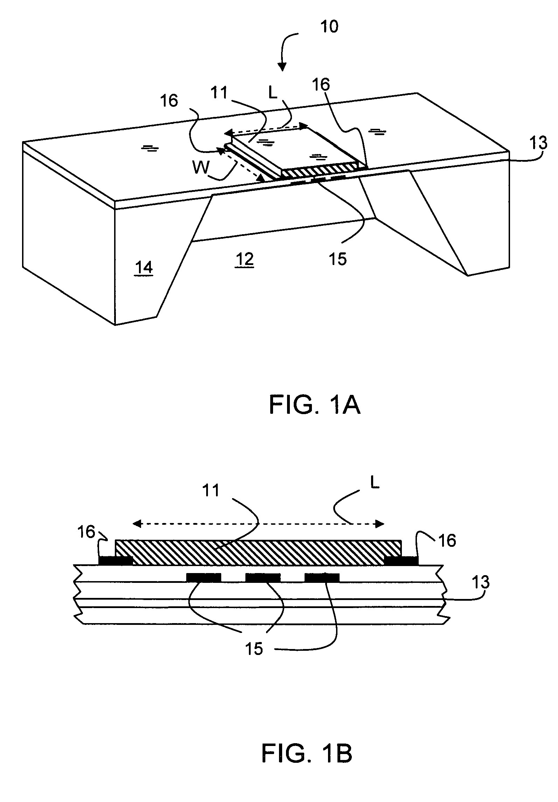

A gas sensor 10 with a sensing layer 11 of metal oxide is shown in FIGs. 1A and 1B. The sensor is integrated with a CMOS circuitry (not shown) on a single chip. Parts of the CMOS layers 13 and handle layer 14 required for the CMOS circuit are etched away to form a MEMS device with a cavity 12 at the location of the sensor. The remaining layers 13 form a thin membrane to support the actual sensor 10.

Embedded within the layers 13 are conducting elements forming a heater 15 to provide a local source of heat to heat the metal oxide 11 during operation of the sensor. The membrane structure above the cavity 12 provides an inherent thermal insulation for the rest of the substrate with the CMOS circuit. Also, the temperature can rise rapidly around the metal oxide layer 11, while the thicker part of the chip reacts due to its thermal inertia with a slower rise of temperature. By controlling the heater accordingly, the metal oxide can be heated to its operating temperature of 250 to 600 degrees Celsius.

The metal oxide layer 11 is contacted by two conductive electrodes 16 and hence acts as a resistor. In the presence of an analyte this resistance changes thereby providing a measure of the concentration of the analyte in the immediate vicinity of the metal oxide layer.

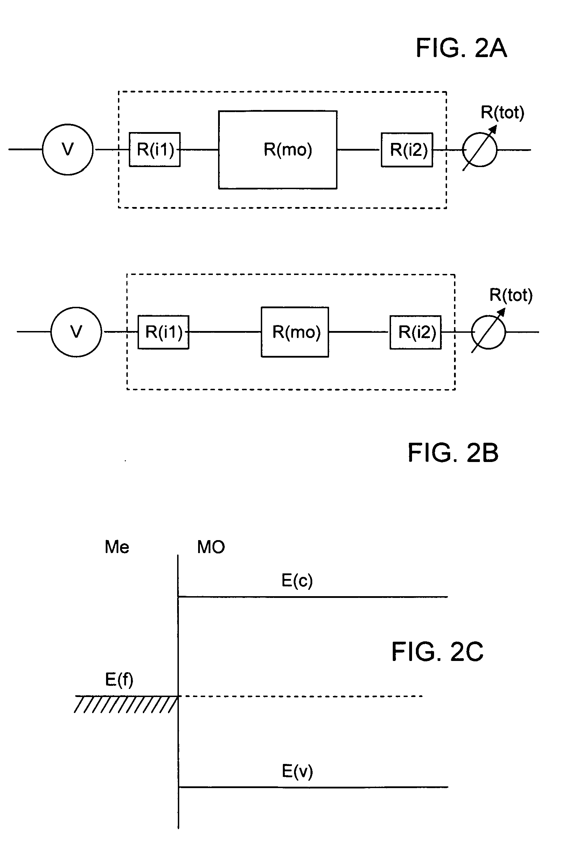

The resistance R(tot) measured across the pair of electrodes 16 and the layer of metal oxide can be represented as the sum of three resistors in series as shown in the equivalent of FIG. 2A. This equivalent circuit diagram emphasizes the contribution of the resistors R(i1) and R(i2) representing the resistance at the interfaces between the metal oxide layer 11 and the two electrodes to the total resistance.

In conventional metal oxide gas sensors the resistance R(mo) of the metal oxide layer is usually large and changes of it are readily accessible to the measurement without having regard to R(i1) and R(i2). However, as illustrated in FIG. 2B the relative contribution of R(i1) and R(i2) to the measured total resistance R(tot) grows as the size of the sensor 10 is reduced.

The size or dimension which is of importance for this aspect is the space between the electrodes 16, i.e. the inter-electrode distance, as bridged by the layer 11 of metal oxide and also referred to in this specification as the length L of the sensor. Referring to the width of an electrode, i.e. its lateral extension, as W, the resistances R(i1) and R(i2) are proportional to 1/W, whereas the resistance R(mo) is proportional to the ratio L/W. The proportion R(i)/R(mo) between both types of resistances varies hence with 1/L, i.e. the relative importance of interface effects increases with decreasing electrode separation L. In case of meandering or other complex shaped electrodes the width is understood to be the minimal distance between the two electrodes. In the present example this characteristic dimension or width is assumed to be at least less than 50 microns or even less than 30 microns.

The interface or contact resistors R(i1) and R(i2) at the transition from the conductor to the semiconductor material and can be represented in an energy band picture as shown in a schematic manner in FIG. 2C. In FIG. 2C the states left of the vertical interface line represent the states of the charge carriers in the metal while the band structure of the semiconducting metal oxide is shown to the right of the interface line. The Fermi level is represented by a dashed horizontal line. The resistance of the interface depends on how many charge carriers can transfer into the upper or conduction band E(c) of the metal oxide.

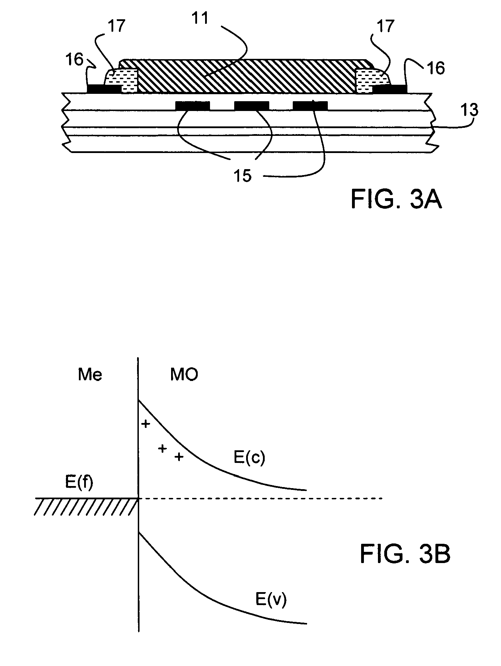

Referring now to an example of a sensor with reduced contact resistance as shown in FIG. 3A, an additional layer 17 has been introduced between the conductors 16 and the layer 11 of metal oxide. The additional layer can reduce the contact resistance in several ways, as explained in the energy band representation of FIGs. 3B - 3D. The examples refer to a sensor material which is n-doped. However the principles applied here can be readily adapted to p-doped sensor materials.

In the example represented by FIG. 3B the additional layer 17 includes a highly doped semiconducting material. In the example this material is n-doped, for example SnO2:Sb. The amount of Sb doping can be for example in the range of 1 - 5 per cent. Other possible dopant materials include Mo, V, Al, Ta, Nb, In, Ge, Ru, Cr, Bi, Ga, Li, F, Ce, La, or Y. Other sensor materials such as indium oxide or zinc oxide can be n-doped using Sn, Ti, Zr, F, Cl, Sb, Ge, Zn, Pb, or Si and B, Al, Ga, In, Si, Ge, Sn, Y, Sc, Ti, Zr, Hf, F, or Cl, respectively.

The migration of charge carriers causes an effect known as band bending near the interface to the conductor, thus making it more likely for charge carriers to pass through the interface by tunneling. This effect is typically achieved using a dopant concentration in the order of 10¹⁹ or 10²⁰ or higher per cubic centimeter. The band bending is represented by the curved shape of the band structure of valence E(v)and conduction band E(c).

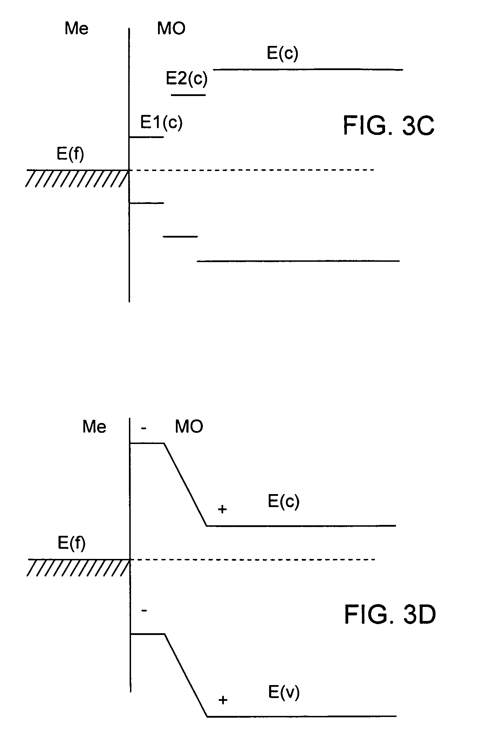

In the example represented by FIG. 3C the additional layer 17 includes a material with a conduction band lower than the conduction band of the metal oxide layer 11. Among the materials having a suitable band structure for tin oxide are vanadium oxides, tungsten oxides, niobium oxides, or copper oxides. The interface layer 17 provides a reduced threshold for thermionic transfer of charge carriers across the interface(s), as the interface resistance has an exponential characteristic proportional to exp(ΔEg/kT) where ΔEg is the energy gap between the bands, k the Boltzmann constant and T the temperature. Hence the charge transfer across two or more smaller energy gaps between the Fermi band of the conductor and the conducting band of the metal oxide is favored over the charge transfer across the same gap without intermediate levels.

In the example represented by FIG. 3D the additional layer 17 introduces a dipole layer as indicated by the (+) and (-) signs between the conducting materials of the electrodes 16 and the metal oxide layer 11. The additional layer can be made for example from a material having a large static dipole moment. For a metal electrode such as a gold electrode this layer could be formed using thiols with a large static dipole moment. The interface layer 17 provides an electric field across the interface favorable for a charge transfer. In the example the dipole layer is oriented such that the positively charged poles face the conductor 16 and the negatively charged poles the metal oxide material 11.

The single interface layer 17 as shown in FIG. 3A can be replaced by several layers to create for example a more gradual transition in the doping levels of the example represented by FIG. 3B. In the example of FIG. 3C, such a multi-layer interface layer 17 can be used to provide multiple intermediate levels of conduction bands (in FIG. 3C represented by the second intermediated level E2(c)).

It is further possible to use multiple layers combining at least two of the three different layers represented by the examples of FIGs. 3B - 3C. For example a first interface layer can be made in accordance with the example of FIG. 3C thus providing a conduction band at an intermediate level. The layer can then be covered by a second strongly doped layer in accordance with the example represented by FIG. 3B to use band bending to facilitate the transition of charge carriers from the intermediate conduction band.

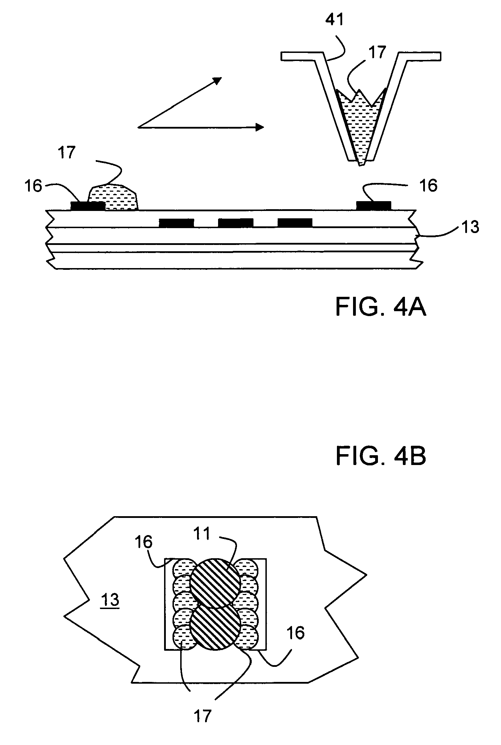

A method of manufacturing the sensor structures represented by FIGs. 3A - 3D is illustrated in FIG. 4A. It is in principle possible to use methods known from the manufacturing of semiconductor circuits such as wet etching and ion implanting using masks to manufacture these devices. However, applying these processes without modifications often requires depositing at least temporarily layers such as polymer layers on top of the metal oxide film 11. These layers and the steps taken to deposit and remove them can interfere with the integrity of the metal oxide film and its surface structure.

For that reason, the methods applied in the manufacturing of semiconductor circuits are less suited for the manufacturing of a chemical sensor on the basis of metal oxide films. Instead, for chemical sensors on the basis of metal oxide films it is considered paramount for any manufacturing process to interfere as little as possible with a film once it is deposited. To avoid such interference the process of FIG. 4A deposits the layers 17, 11 directly in the desired spatial and temporal sequence. The method used is a contact-free printing method, e.g. an inkjet printing method, which is used to first deposit the material making up the interface layer 17 in the area of the electrodes 16 before depositing the metal oxide film 11 in the area between the electrodes and the interface layers 17.

In FIG. 4A one nozzle 41 of a print head is shown in position to deposit the interface material 17 (or a pre-cursor of it) from a dispersion in suitable solvents on top of the second electrode 16, with the interface layer 17 on top of the first electrode 16 being deposited during a previous step. The metal oxide film can be deposited after the interface layers giving rise to a structure which is schematically depicted in FIG. 4B. The deposition process can require an intermediate calcination after the deposition of a layer and prior to the deposition of a following layer. With or without the use of such an intermediate calcination, it is also beneficial to use in the subsequently deposited materials solvents which dissolve the already deposited layer to a lesser degree or not at all.

The exact locations and size of the printed structures and the timing of the deposition steps can vary depending on the sensor design and the material used in the process, particularly the properties of the inks. Given the small size of the structures both the interface layers and the metal oxide layer may be deposited for example as three single dots rather than multiple dots shown in FIG. 4B.

The material of the electrodes is typically a metal, for example Pt, Au, Al or W. The metal-oxide used can be tin oxide, tungsten oxide, gallium oxide, indium oxide, or zinc oxide. As described the sensor can also include a micro electro-mechanical system or MEMS type heat source integrated within the sensor. The sensor is built integrated with its own CMOS circuitry for control and read-out. The physical dimensions of the substrate including the CMOS circuit and the MEMS sensor are less than 5mm x 5mm.

As an alternative to the above methods, selective ion implanting can be used. Using conventional ion beam implanting methods, areas around the electrodes can be doped selectively to the desired level thus creating the interface layer. As an alternative, diffusion may be used for doping the interface region.

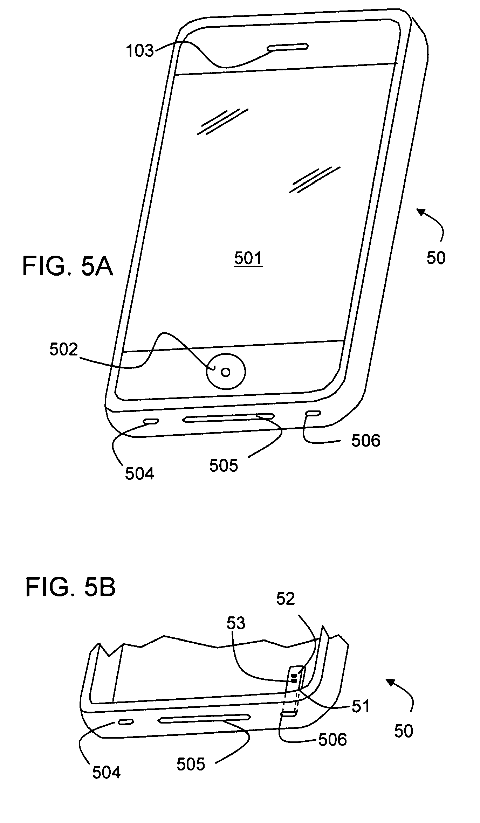

A chemical sensor in accordance with above can be for example part of a portable electronic device such as a mobile phone as shown in FIG. 5A and 5B. As described above the chemical sensor needs to be of a (sufficiently small) size to fit within the limited volume available.

In FIG. 5A, the housing 50 of the mobile phone includes a front side with a screen 501 and elements like buttons 502 to let a user interact with the phone. Also shown on the front side is an opening 503 for a loudspeaker. Further openings 504,505 are located at a lower side wall of the housing 50. It is well known to mount components like microphones and loudspeakers behind such openings.

Another opening 506 is located at the lower side wall. As shown in FIG. 5B the opening 106 is linked to a tubular duct 51 passing through the interior of the housing. A chemical sensor 52 and a humidity sensor 53 are both mounted along the duct 51 such that the sensitive areas of both sensors are essentially exposed air of the same composition entering the duct through the opening 506. The actual size and shape of the duct 51 depends on the volume available and the nature of the chemical sensor 52 and the humidity sensor 53, but given the physical constraints of portable mobile devices the diameter of the opening is typically in the range of less than 2mm and in the present example actually about 1mm.

The chemical sensor 52 is a sensor in accordance with the examples described above and both it and the humidity sensor 53 can be manufactured as described for example in the cited application WO 2012/100362 or in WO 95/19563. The humidity sensor is best combined with a temperature sensor. Such sensors are commercially available, e.g. from Sensirion™ under the trade name SHTC1. The SHTC1 sensor measures 2 mm x 2 mm x 0.8 mm. Both sensors are mounted adjacent to each other in the duct 51.

## Claims

1. A chemical sensor (10,52) comprising
- two electrodes (16),
- at least one layer (11) of metal oxide arranged between the two electrodes (16) with the length (L) of the layer (11) of metal oxide between the electrodes being less than 50 microns,
**characterized in that** the chemical sensor (10,52) further comprises
- at least one interface layer (17) formed between the surface of at least one of the electrodes (16) and the layer (11) of metal oxide,
wherein the interface layer (17) is adapted to lower the contact resistance between the electrodes (16) and the layer (11) of metal oxide by facilitating transport of charge carriers across layer boundaries by at least one of the group consisting of
* the interface layer (17) including a material which creates under static conditions a charged layer leading to a band bending at the interface to the electrode material, thus making it more likely for the charge carriers to pass through the interface by tunnelling,
* the interface layer (17) including a material having a conduction band at a level between the Fermi level of the electrode material and the conduction band of the metal oxide, and
* the interface layer (17) including a material forming a dipole layer between the electrode material and the layer (11) of metal oxide.

2. The chemical sensor (10,52) according to claim 1, wherein the interface layer (17) includes a material doped to a higher degree than the metal oxide in the metal oxide layer (11).

3. The chemical sensor (10,52) according to any of the preceding claims, wherein the interface layer (17) includes a material doped to a concentration level of at least 10¹⁹ cm⁻³.

4. The chemical sensor (10,52) according to any of the preceding claims, wherein the interface layer (17) includes n-doped material.

5. The chemical sensor (10,52) according to any of the preceding claims, wherein the interface layer (17) is composed of one or more deposits created through a direct deposition of the interface material or its pre-cursor.

6. The chemical sensor (10,52) according to any of the preceding claims, wherein the interface layer (17) and the metal oxide layer (11) are composed of one or more deposits created through a direct deposition process.

7. The chemical sensor (10,52) according to claim 6, wherein the interface layer (17) and the metal oxide layer (17) are composed of one or more deposits created through the direct deposition of materials through a nozzle.

8. The chemical sensor (10,52) according to any of the preceding claims, being integrated with a CMOS circuit (13) onto a common substrate.

9. The chemical sensor (10,52) according to any of the preceding claims, comprising heating elements (15) to heat the metal oxide layer (11) to an operating temperature, wherein the heating elements are part of a MEMS-type structure.

10. A portable electronic device comprising a chemical sensor (52) in accordance with any of the preceding claims.

11. The portable electronic device according to claim 10, being selected from a group comprising:
a mobile phone,
a handheld computer,
an electronic reader,
a tablet computer,
a game controller,
a pointing device,
a photo or a video camera,
a digital music player,
a wrist watch,
a key fob,
a head set, and
a computer peripheral.

## Patentansprüche

1. Ein chemischer Sensor (10, 52) umfassend
- zwei Elektroden (16),
- mindestens eine Metalloxidschicht (11) die zwischen den beiden Elektroden (16) angeordnet ist, wobei die Länge (L) der Metalloxidschicht (11) zwischen den Elektroden weniger als 50 Mikrometer beträgt,
**dadurch gekennzeichnet, dass** der chemische Sensor (10, 52) weiter
- mindestens eine Schnittstellenschicht (17), die zwischen der Oberfläche mindestens einer der Elektroden (16) und der Metalloxidschicht (11) gebildet ist, umfasst,
wobei die Schnittstellenschicht (17) zur Senkung des Kontaktwiderstands zwischen den Elektroden (16) und der Metalloxidschicht (11) ausgestaltet ist, indem der Transport von Ladungsträger über Schichtengrenzen erleichtert wird, mittels mindestens eine der Gruppen bestehend aus
* der Schnittstellenschicht (17), einschliesslich eines Materials das unter statischen Bedingungen eine geladene Schicht erzeugt, die zu einer Bänderverbiegung an der Schnittstelle des Elektrodenmaterials führt, so dass die Wahrscheinlichkeit steigt dass die Ladungsträger durch die Schnittstelle infolge des Tunneleffekts wandern,
* der Schnittstellenschicht (17), einschliesslich eines Materials mit einem Leitungsband auf einem Niveau zwischen dem Fermi-Niveau des Elektrodenmaterials und dem Leitungsband des Metalloxids, und
* der Schnittstellenschicht (17), einschliesslich eines Materials das eine Dipolschicht zwischen dem Elektrodenmaterial und der Metalloxidschicht (11) bildet.

2. Der chemische Sensor (10, 52) nach Anspruch 1, wobei die Schnittstellenschicht (17) ein Material umfasst, das in einem höheren Grad als das Metalloxid in der Metalloxidschicht (11) dotiert ist.

3. Der chemische Sensor (10, 52) nach einem der vorangehenden Ansprüche, wobei die Schnittstellenschicht (17) ein Material umfasst, das auf einem Konzentrationsniveau von mindestens 10¹⁹ cm⁻³ dotiert ist.

4. Der chemische Sensor (10, 52) nach einem der vorangehenden Ansprüche, wobei die Schnittstellenschicht (17) ein n-dotiertes Material umfasst.

5. Der chemische Sensor (10, 52) nach einem der vorangehenden Ansprüche, wobei die Schnittstellenschicht (17) aus einer oder mehreren Ablagerungen gebildet ist, die mittels einer direkten Ablagerung des Schnittstellenmaterials oder seines Vorläufers gebildet ist.

6. Der chemische Sensor (10, 52) nach einem der vorangehenden Ansprüche, wobei die Schnittstellenschicht (17) und die Metalloxidschicht (11) aus einer oder mehreren Ablagerungen gebildet ist, die mittels eines direkten Ablagerungsprozesses gebildet ist.

7. Der chemische Sensor (10, 52) nach Anspruch 6, wobei die Schnittstellenschicht (17) und die Metalloxidschicht (11) aus einer oder mehreren Ablagerungen gebildet ist, die mittels der direkten Ablagerung von Material durch eine Düse gebildet ist.

8. Der chemische Sensor (10, 52) nach einem der vorangehenden Ansprüche, die mit einer CMOS-Schaltung (13) auf einem gemeinsamen Substrat integriert ist.

9. Der chemische Sensor (10, 52) nach einem der vorangehenden Ansprüche, umfassend Heizelemente (15) um die Metalloxidschicht (11) auf eine Betriebstemperatur zu erhitzen, wobei die Heizelemente Teil einer Struktur vom Typ MEMS ist.

10. Eine tragbare elektronische Vorrichtung umfassend einen chemischen Sensor (52) nach einem der vorangehenden Ansprüche.

11. Die tragbare elektronische Vorrichtung nach Anspruch 10, ausgewählt aus der Gruppe umfassend:
ein Mobiltelefon,
einen Taschencomputer,
ein elektronisches Lesegerät,
ein Tablett,
einen Gamecontroller,
einen Pointer,
eine Foto- oder Videokamera,
ein digitales Musikabspielgerät,
eine Armbanduhr,
einen Schlüsselanhänger,
ein Headset,
einen Bilderrahmen
und ein Computerperipheriegerät.

## Revendications

1. Un capteur chimique (10, 52) comprenant
- deux électrodes (16),
- au moins une couche (11) d'oxyde de métal arrangée entre les deux électrodes (16) avec une longueur (L) de la couche (11) d'oxyde de métal entre les électrodes inférieure à 50 microns,
**caractérisé en ce que** le capteur chimique (10, 52) comprend en outre
- au moins une couche d'interface (17) formée entre la surface d'au moins un des deux électrodes (16) et la couche (11) d'oxyde de métal,
la couche d'interface (17) étant adaptée à diminuer la résistance de contact entre les électrodes (16) et la couche (11) d'oxyde de métal en facilitant le transport de porteurs de charge à travers des délimitations de couche par au moins un du groupe consistant de
* la couche d'interface (17) incluant un matériau qui crée, dans des conditions statiques, une couche chargée menant à une flexion de bande à l'interface avec le matériau d'électrode, par cela augmentant la probabilité que les porteurs de charge passent à travers l'interface par l'effet tunnel,
* la couche d'interface (17) incluant un matériau ayant une bande de conduction à un niveau entre le niveau Fermi du matériau d'électrode et la bande de conduction de l'oxyde de métal, et
* la couche d'interface (17) incluant un matériau qui forme une couche de dipôle entre le matériau d'électrode et la couche (11) d'oxyde de métal.

2. Le capteur chimique (10, 52) selon la revendication 1, la couche d'interface (17) incluant un matériau dopé plus que l'oxyde métal dans la couche (11) d'oxyde de métal.

3. Le capteur chimique (10, 52) selon l'une des revendications précédentes, la couche d'interface (17) incluant un matériau dopé à un niveau de concentration d'au moins 10¹⁹ cm⁻³.

4. Le capteur chimique (10, 52) selon l'une des revendications précédentes, la couche d'interface (17) incluant du matériau dopé n.

5. Le capteur chimique (10, 52) selon l'une des revendications précédentes, la couche d'interface (17) étant composée d'une ou de plusieurs dépositions crées par une directe déposition du matériau d'interface ou de son précurseur.

6. Le capteur chimique (10, 52) selon l'une des revendications précédentes, la couche d'interface (17) et la couche (11) d'oxyde de métal étant composées d'une ou de plusieurs dépositions crées par un processus de déposition directe.

7. Le capteur chimique (10, 52) selon la revendication 6, la couche d'interface (17) et la couche (11) d'oxyde de métal étant composées d'une ou de plusieurs dépositions crées par la déposition directe de matériaux à travers une buse.

8. Le capteur chimique (10, 52) selon l'une des revendications précédentes, étant intégré avec un circuit CMOS (13) sur un substrat commun.

9. Le capteur chimique (10, 52) selon l'une des revendications précédentes, comprenant des éléments de chauffage (15) afin de chauffer la couche (11) d'oxyde de métal jusqu'à une température d'opération, les éléments de chauffage faisant partie d'une structure de type MEMS.

10. Un dispositif électronique portable comprenant un capteur chimique (52) selon l'une des revendications précédentes.

11. Le dispositif électronique portable selon la revendication 10, étant sélectionné du groupe comprenant:
un téléphone portable,
un ordinateur portable,
un lecteur électronique,
une tablette,
un contrôleur de jeu,
un dispositif de pointage,
une camera photo ou vidéo,
un lecteur de musique digital,
une montre-bracelet,
une clé fob,
une casque micro,
un cadre photo
et une périphérique informatique.
